# EUROPEAN PATENT SPECIFICATION

(11) **EP 2 716 533 B1**
(45) Date of publication and mention of the grant of the patent: **15.04.2015**
(21) Application number: 13187095.8
(22) Date of filing: 02.10.2013
(51) Int. Cl.: B62K 11/14, B62K 23/04, F16H 59/18, F16H 61/21

(54) **Straddle-type vehicle**
Grätschsitz-Fahrzeug
Véhicule de type à enfourcher

(30) Priority: 03.10.2012 JP 2012221005
(43) Date of publication of application: 09.04.2014
(73) Proprietor: Yamaha Hatsudoki Kabushiki Kaisha, Iwata-shi, Shizuoka 438-8501 (JP)
(72) Inventor: Zenno, Toru, Iwata-shi, Shizuoka 438-8501 (JP)
(74) Representative: Zimmermann, Tankred Klaus

(56) References cited:
- EP-A1- 1 985 894
- DE-A1- 19 702 788
- JP-A- 2009 156 448
- US-A- 4 976 170
- US-A1- 2001 039 800

## Description

### BACKGROUND OF THE INVENTION

### 1. Field of the Invention

This invention relates to a straddle-type vehicle that controls a clutch and a transmission using an actuator.

### 2. Description of the Related Art

In related art, straddle-type vehicles that control clutches and transmissions using actuators have been used. JP 2010-117005 A has disclosed a motorcycle as an example of the straddle-type vehicle. This type of motorcycle includes a motorcycle that automatically controls a transmission ratio according to a vehicle speed and an operation of an accelerator grip (an amount of turn of the accelerator grip).

EP 1 985 894 A1, which is considered as the closest prior art, describes a transmission which includes an electronically controlled change gear mechanism, and a control unit that controls the change gear mechanism. The control unit includes a transmission ratio control portion, a shift mode selection portion that can select a shift down permission mode. In the shift down permission mode, the transmission ratio control portion shifts down the transmission ratio of the transmission when a throttle is operated to reflect the rider's intention to actively use kick down or engine brake.

### SUMMARY OF THE INVENTION

An object of one embodiment of the invention is to provide a straddle-type vehicle that can obtain appropriate speed reduction desired by a rider during an automatic control of a transmission ratio.

This object is achieved by a straddle-type vehicle according to claim 1.

As examples of speed reduction methods of the motorcycle, there are i) speed reduction by braking operation and ii) speed reduction using an engine brake by setting an amount of operation of the accelerator grip to zero. Generally, deceleration i) by the braking operation is larger and deceleration by the method of (ii) using the engine brake is smaller. Accordingly, appropriate deceleration may not be obtained by the two methods. Under the circumstances, a rider of the motorcycle in related art requiring manual operation of a clutch and a transmission may operate a shift pedal to change the transmission ratio (shift position) toward the low-speed, and thereby, increase the engine brake to reduce the speed. According to the speed reduction method, the deceleration at the medium degree between the method i) and the method ii) is obtained.

However, the automatic control of the transmission ratio is to set the transmission at the transmission ratio determined according to the vehicle speed and the amount of operation of the accelerator grip. Accordingly, it cannot be realized to obtain the appropriate deceleration by changing the transmission ratio toward the low-speed to increase the engine brake during the automatic control of the transmission ratio.

A straddle-type vehicle according to one embodiment of the invention includes an engine, a transmission that transmits power of the engine to a driving wheel, an actuator that operates the transmission to change a transmission ratio, an accelerator grip that is turnable from a neutral position in a positive direction and a negative direction, and a controller that controls the transmission so that the transmission ratio of the transmission coincides with a transmission ratio according to an amount of turn of the accelerator grip. The controller changes the transmission ratio of the transmission toward a low-speed due to the turn of the accelerator grip from the neutral position in the negative direction.

According to the straddle-type vehicle mentioned above, the transmission ratio is changed toward the low-speed by turning the grip in the negative direction during the automatic control of the transmission ratio. Accordingly, the options of the speed reduction method may be increased. That is, i) speed reduction by braking operation, ii) speed reduction using the engine brake by setting the amount of turn of the accelerator grip to zero, i.e., placing the accelerator grip in the neutral position, and additionally, iii) speed reduction using the engine brake by changing the transmission ratio toward the low-speed can be selected. As a result, appropriate speed reduction desired by the rider can be obtained while automatic control of the transmission ratio is performed. Particularly, the speed reduction of iii) is realized by turning the accelerator grip in the negative direction, and thus, the speed reduction of iii) may be obtained by a simple operation. As a result, the speed reduction desired by the rider may be realized without the need for complex operation.

The straddle-type vehicle may include a sensor that detects the amount of turn of the accelerator grip in the negative direction, and the controller may control the transmission ratio according to the detected amount of turn. Thereby, the degree of freedom of the control of the transmission ratio may be increased. For example, the timing of shift change may be changed in response to the amount of turn of the accelerator grip.

The controller may include a storage device that previously stores a map defining a relationship between a vehicle speed at which the transmission ratio is changed toward the low-speed and the amount of turn of the accelerator grip, and the map may be set so that the vehicle speed at which the transmission ratio is changed toward the low-speed may become higher as the amount of turn of the accelerator grip in the negative direction increases. According to the embodiment, a time for the shift change may be made earlier as the amount of turn of the accelerator grip in the negative direction becomes larger.

The controller may include a storage device that previously stores a map defining a relationship between a vehicle speed at which the transmission ratio is changed toward the low-speed and the amount of turn of the accelerator grip, and the map may be defined so that the transmission ratio may be changed toward the low-speed when the amount of turn of the accelerator grip in the negative direction exceeds a constant threshold value independent of the vehicle speed. According to the embodiment, the transmission ratio is changed toward the low-speed when the amount of turn of the accelerator grip in the negative direction exceeds the threshold value, and thus, shift change may be executed at time intended by the rider.

The straddle-type vehicle may include a switch that detects whether or not the amount of turn of the accelerator grip has reached a threshold value, and the controller may change the transmission ratio toward the low-speed in response to an output of the switch. Thereby, the transmission ratio can be changed toward the low-speed when the amount of turn of the accelerator grip reaches the threshold value.

The controller may change the transmission ratio of the transmission toward a top-speed due to return of the accelerator grip to the neutral position after the turn in the negative direction. Thereby, the operability of the vehicle can be improved.

The controller may include a storage device that previously stores a map defining a relationship between a vehicle speed at which the transmission ratio is changed toward the low-speed and the amount of turn of the accelerator grip, and the map may be defined with respect to both the amount of turn of the accelerator grip in the positive direction and the amount of turn in the negative direction. Thereby, the control according to the amount of turn of the accelerator grip in the positive direction and the control according to the amount of turn in the negative direction can be performed using the common map, and processing executed by the controller can be simplified.

### BRIEF DESCRIPTION OF THE DRAWINGS

Figs. 1A and 1B show an appearance of a motorcycle according to an embodiment of the invention.
Fig. 2 is a block diagram showing a configuration of the motorcycle.
Figs. 3A and 3B are diagrams for explanation of an accelerator grip.
Fig. 4 is a block diagram showing functions of a controller.
Fig. 5 shows examples of shift-down maps and shift-up maps.
Fig. 6 shows an example of shift-down map.
Fig. 7 is a flowchart showing an example of processing executed by an auto shift change determination unit.
Fig. 8 is a block diagram for explanation of functions of a controller according to an alternative example of the invention.
Fig. 9 is a block diagram showing functions of a controller of a motorcycle including a continuously variable transmission.
Fig. 10 shows an example of a map used by the controller shown in Fig. 9.

### DETAILED DESCRIPTION OF THE INVENTION

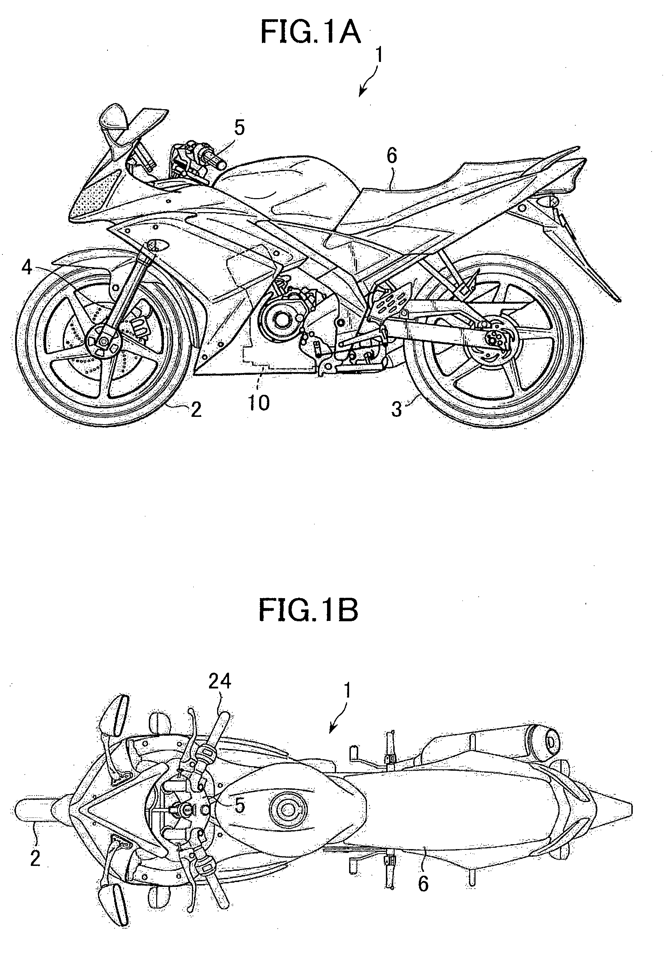

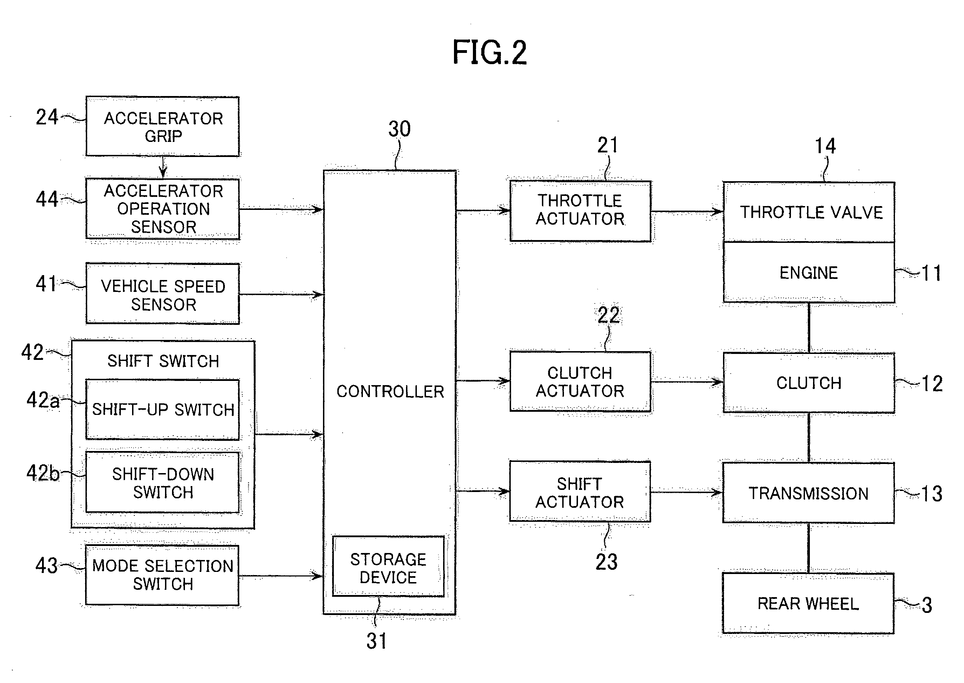

As below, an embodiment according to the invention will be explained with reference to the drawings. Figs. 1A and 1B show an appearance of a motorcycle 1 as an example of straddle-type vehicle of an embodiment according to the invention. Fig. 1A is a side view and Fig. 1B is a plan view. Fig. 2 is a block diagram showing a configuration of the motorcycle 1. The straddle-type vehicle according to the invention may be a scooter-type motorcycle. Further, the straddle-type vehicle may be an all terrain vehicle having four wheel or snowmobile.

As shown in Figs. 1A and 1B, the motorcycle 1 has a front wheel 2. The front wheel 2 is supported at the lower end of a front fork 4. The front fork 4 is connected to a handle 5 through a steering shaft (not shown). The handle 5, the front fork 4, and the front wheel 2 are rotatable to right and left around the steering shaft. A seat 6 is provided at the rear of the handle 5.

The motorcycle 1 includes an engine unit 10 and a rear wheel 3 as a driving wheel. As shown in Fig. 2, the engine unit 10 includes an engine 11, a clutch 12, and a transmission 13. The engine 11 has a throttle valve 14 that controls an amount of air to be supplied to the engine 11. The opening of the throttle valve 14 is controlled by an actuator 21.

The clutch 12 and the transmission 13 are provided in a power transmission path from the engine 11 to the rear wheel 3. The clutch 12 is set to a state of transmitting power of the engine 11 to the transmission 13 (i.e., an engagement state in which a drive member and a driven member of the clutch 12 are engaged) or a state of blocking power transmission to the transmission 13 (a non-engagement state in which the drive member and the driven member are not engaged). The motorcycle 1 has a clutch actuator 22 that operates the clutch 12 so that the power transmission state though the clutch 12 may change.

The transmission 13 in the example explained here is a multi-level variable transmission having a plurality of shift positions (gear positions). That is, the transmission ratios of the shift positions have discrete values. The transmission 13 includes a plurality of transmission gears, and selectively engages them to form the respective shift positions. The transmission 13 is not limited to that, but may be a continuously variable transmission, for example. When the transmission 13 is the continuously variable transmission, a plurality of shift positions may be defined for the continuously variable transmission, and a controller 30 to be described later may change the transmission ratio among the shift positions. Further, the controller 30 may continuously change the transmission ratio of the continuously variable transmission. The embodiment of continuously changing the transmission ratio of the continuously variable transmission will be described later in detail. The motorcycle 1 has a shift actuator 23 that operates the transmission 13 so that the shift position of the transmission 13 may change.

In the example in Fig. 2, the motorcycle 1 includes the clutch actuator 22 that operates the clutch 12 and the shift actuator 23 that operates the transmission 13. However, the clutch 12 and the transmission 13 may be operated by a common actuator. That is, one actuator may operate the transmission gear of the transmission 13 and the clutch 12. Further, two clutches may be provided in the motorcycle 1. That is, the transmission 13 may have two input shafts, and clutches may be respectively provided in a path from the engine 11 to one input shaft and a path from the engine 11 to the other input shaft. Furthermore, in the case where the transmission 13 is a continuously variable transmission, the motorcycle 1 may include an automatic clutch

(for example, a centrifugal clutch). In this case, the motorcycle 1 may not necessarily include the clutch actuator 22.

As shown in Fig. 2, the motorcycle 1 includes the controller 30 that controls the engine 11, the clutch 12, and the transmission 13. The controller 30 includes a microprocessor that executes processing relating to the control. Further, the controller 30 includes a storage device 31 including a memory such as a ROM (Read Only Memory) or RAM (Random Access Memory). In the storage device 31, programs defining processing executed by the microprocessor and maps used during execution of processing are stored in advance.

As shown in Fig. 2, the motorcycle 1 includes a vehicle speed sensor 41 for sensing a vehicle speed. The vehicle speed sensor 41 is provided on an axle of the front wheel 2, an output shaft of the transmission 13, or an axle of the rear wheel 3. The controller 30 calculates the vehicle speed based on an output signal of the vehicle speed sensor 41. The motorcycle 1 includes a shift switch 42 operated by a rider. The shift switch 42 in this example includes a shift-up switch 42a for receiving a shift-up request from the rider and a shift-down switch 42b for receiving a shift-down request from the rider. The shift-up request is a shift change request to change the shift position (transmission ratio) toward the top-speed (for example, 5th speed or 6th speed). The shift-down request is a shift change request to change the shift position (transmission ratio) toward a low-speed (that is, 1st speed). The shift switch 42 respectively inputs signals in response to the shift-up request and the shift-down request to the controller 30. The shift switch 42 is provided on the handle 5, for example. Further, the shift switch 42 may be provided on a shift pedal that can be operated by the rider with a foot. The controller 30 changes the shift position by one level in response to one shift change request.

The controller 30 in this example has an auto mode and a manual mode as control modes of the transmission 13. In the auto mode, the controller 30 controls the transmission 13 so that the shift position of the transmission 13 coincides with a shift position obtained according to the vehicle speed and the operation of the accelerator grip 24. In the manual mode, the controller 30 controls the transmission 13 to be at the shift position corresponding to the shift change request received from the shift switch 42 when the shift switch 42 is operated by the rider. The motorcycle 1 has a mode selection switch 43 operated by the rider. The mode selection switch 43 is operated by the rider and outputs a switch request with respect to the control mode corresponding to the operation to the controller 30. The control of the controller 30 in these two modes will be described later in detail.

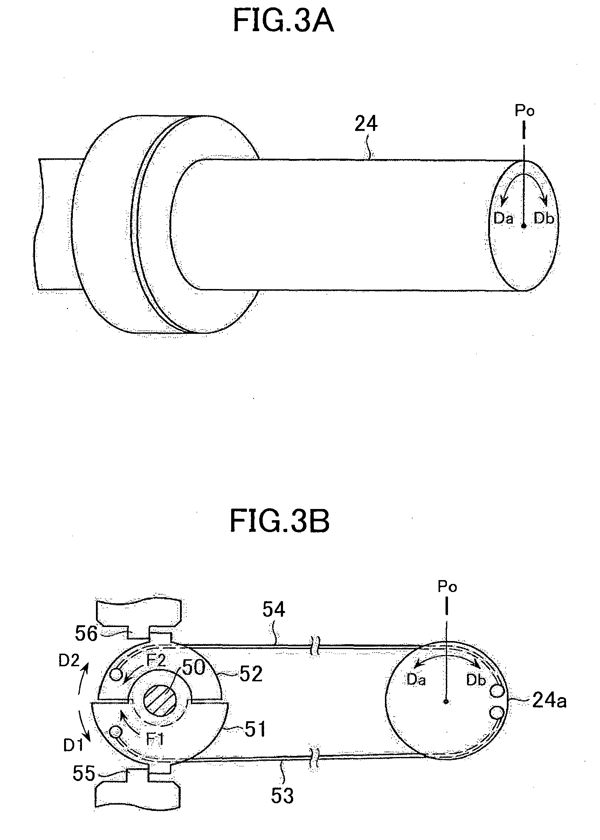

As shown in Fig. 1B, the motorcycle 1 includes the accelerator grip 24 provided on the handle 5 and operated by the rider. Figs. 3A and 3B are diagrams for explanation of the accelerator grip 24. As shown in Fig. 3A, the accelerator grip 24 can turn from a neutral position in a positive direction and a negative direction (In Figs. 3A and 3B, the neutral position, the positive direction, and the negative direction are shown by signs Po, Da, Db, respectively). The accelerator grip 24 is urged toward the neutral position Po. That is, the neutral position Po is an initial position where the accelerator grip 24 returns when a force to turn the accelerator grip 24 in the positive direction Da and a force to turn the accelerator grip 24 in the negative direction Db are eliminated.

Fig. 3B is a schematic view showing an example of a structure of realizing the above described movements of the accelerator grip 24. In this drawing, the accelerator grip 24 is located in the neutral position Po. In the example of the drawing, two pulleys 51, 52 are provided on a support shaft 50 and arranged in a shaft direction. The pulleys 51, 52 can turn relative to each other. The first pulley 51 is connected to a grip pulley 24a of the accelerator grip 24 through a first wire 53. The second pulley 52 is connected to the grip pulley 24a through a second wire 54. When the accelerator grip 24 turns in the positive direction Da, the first pulley 51 is pulled by the first wire 53 and turns in a first direction D1. When the accelerator grip 24 turns in the negative direction Db, the second pulley 52 turns in a second direction D2. The first direction D1 and the second direction D2 are opposite to each other. The first pulley 51 is urged in the second direction D2 by an elastic force F1 of a spring (not shown, for example, a coil spring). Further, the first pulley 51 is in contact with a stopper 55 when the accelerator grip 24 is in the neutral position Po. When the accelerator grip 24 is in the neutral position Po, the stopper 55 restricts turn of the first pulley 51 in the second direction D2. The second pulley 52 is urged in the first direction D1 by an elastic force F2 of a spring (not shown, for example, a coil spring). The second pulley 52 is in contact with a stopper 56 when the accelerator grip 24 is in the neutral position Po. When the accelerator grip 24 is in the neutral position Po, the stopper 56 restricts turn of the second pulley 52 in the first direction D1. According to the above structure, when the accelerator grip 24 is turned in the positive direction Da, the first pulley 51 turns in the first direction D1 against the elastic force F1 of the spring to separate away from the stopper 55. When the force turning the accelerator grip 24 in the positive direction Da is eliminated, the first pulley 51 turns in the second direction D2 into contact with the stopper 55 by the elastic force F1, and the accelerator grip 24 returns to the neutral position Po. When the accelerator grip 24 is turned in the negative direction Db, the second pulley 52 turns in the second direction D2 against the elastic force F2 of the spring to separate away from the stopper 56. When the force turning the accelerator grip 24 in the negative direction Db is eliminated, the second pulley 52 turns in the first direction D1 into contact with the stopper 56 by the elastic force F2, and the accelerator grip 24 returns to the neutral position Po.

The structure that enables the accelerator grip 24 to turn in the two directions is not limited to that shown in Fig. 3B. For example, the pulleys 51, 52 are not necessarily provided in the structure. Further, a first spring that urges the accelerator grip 24 in the position in the positive direction Da to the neutral position and a second spring that urges the accelerator grip 24 in the position in the negative direction Db to the neutral position may be provided in the accelerator grip 24.

As shown in Fig. 2, the motorcycle 1 includes the accelerator operation sensor 44 for sensing the operation of the accelerator grip 24. The accelerator operation sensor 44 in the example explained here outputs signals in response to the amount of turn and the direction of the accelerator grip 24 to the controller 30. For example, the accelerator operation sensor 44 outputs a signal in response to the amount of positive turn when the accelerator grip 24 turns in the positive direction, and outputs a signal in response to the amount of negative turn when the accelerator grip 24 turns in the negative direction. The accelerator operation sensor 44 is provided on the accelerator grip 24, for example. The accelerator operation sensor 44 may be provided toward the pulleys 51, 52. In this case, the accelerator operation sensor 44 may include two sensors, and one sensor may output a signal in response to an amount of turn of the first pulley 51 and the other sensor may output a signal in response to an amount of turn of the second pulley 52.

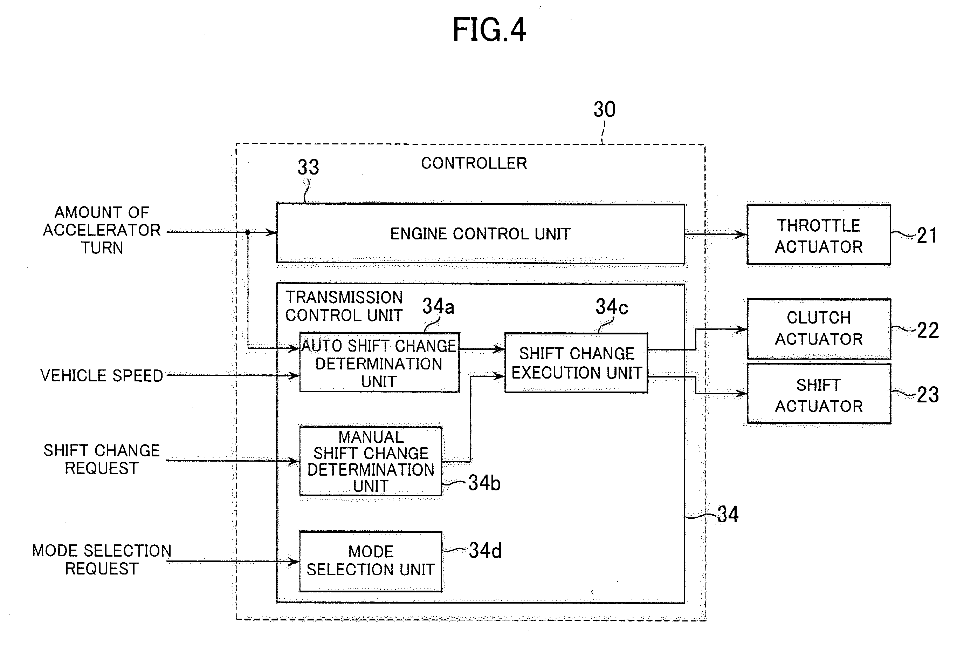

Fig. 4 is a block diagram showing functions of the controller 30. As shown in the same drawing, the controller 30 has, the function thereof, an engine control unit 33 and a transmission control unit 34. The functions of the respective units are realized by processing defined by programs stored in the storage device 31.

The engine control unit 33 controls the engine 11 according to an amount of operation of the accelerator grip 24 (hereinafter, referred to as "amount of accelerator turn") detected by the accelerator operation sensor 44. Specifically, the engine control unit 33 controls the engine 11 according to an amount of turn of the accelerator grip 24 from the neutral position in the positive direction (amount of positive accelerator turn). In the example explained here, the opening of the throttle valve 14 (hereinafter, referred to as "throttle opening") is controlled according to the amount of positive accelerator turn. Specifically, the engine control unit 33 calculates a target throttle opening in response to the amount of positive accelerator turn, and operates the throttle actuator 21 so that the actual throttle opening coincides with the target throttle opening.

The engine control unit 33 controls the throttle valve 14 so that the throttle opening becomes larger as the amount of accelerator turn increases. The engine control unit 33 sets the throttle opening to the minimum (0%) when the accelerator grip 24 is in the neutral position, i.e., the amount of accelerator turn is 0%. In this regard, the torque output by the engine is negative, and an engine brake is obtained. As will be described later, the controller 30 of the embodiment changes the transmission ratio toward the low-speed when the accelerator grip 24 is operated from the neutral position in the negative direction. Thereby, the larger engine brake is obtained.

When the auto mode is selected, the transmission control unit 34 automatically controls the transmission 13 according to the driving state of the vehicle detected by the sensor without the need for the operation of the shift switch 42 by the rider. Specifically, the driving state is represented by the vehicle speed detected through the vehicle speed sensor 41 and the amount of accelerator turn detected through the accelerator operation sensor 44. The transmission control unit 34 controls the transmission 13 so that the transmission ratio of the transmission 13 may coincide with the transmission ratio determined according to the vehicle speed and the amount of accelerator turn. As described above, the transmission 13 explained here is the multi-level variable transmission having the shift positions. Therefore, in this embodiment, the transmission ratio determined according to the vehicle speed and the amount of accelerator turn means the shift position determined according to them. The transmission control unit 34 executes shift down (change of the shift position toward the low-speed (the 1st speed)) or shift up (change of the shift position toward the top-speed (generally, 5th speed or 6th speed) so that the shift position of the transmission 13 coincides with the shift position obtained according to the vehicle speed and the amount of accelerator turn.

Furthermore, in the auto mode, the transmission control unit 34 of the embodiment changes the transmission ratio toward the low-speed due to turn of the accelerator grip 24 from the neutral position in the negative direction. That is, the transmission control unit 34 executes shift down due to sensing of the amount of negative accelerator turn. In other words, the shift down is executed so that the shift position of the transmission 13 may coincide with a shift position determined according to the vehicle speed and the amount of accelerator turn of the accelerator grip 24 in the negative direction (amount of negative accelerator operation).

According to the automatic control of the shift position according to the vehicle speed and the operation of the accelerator grip, it is not necessary for the rider to operate the shift switch and the shift pedal for changing the shift position, and thus, the operability of the vehicle is improved. In the motorcycle in related art that performs automatic control, the engine brake acts when the accelerator grip is returned to the neutral position (initial position), and thus, the acceleration of the vehicle may be suppressed, however, the rider sometimes desires a larger deceleration than the deceleration by the above operation. In the embodiment, the shift down is executed due to the sensing of the amount of negative accelerator turn, and thus, the rider can increase the deceleration of the vehicle by turning the accelerator grip 24 from the neutral position in the negative direction. As a result, the appropriate deceleration desired by the rider can be obtained.

As shown in Fig. 4, the transmission control unit 34 has an auto shift change determination unit 34a, a manual shift change determination unit 34b, a shift change execution unit 34c, and a mode selection unit 34d. The transmission control unit 34 does not necessarily have the manual shift change determination unit 34b and the mode selection unit 34d. That is, the controller 30 may have only the auto mode as the control mode of the transmission 13. In this case, the motorcycle 1 does not necessarily have the shift switch 42 and the mode selection switch 43.

The auto shift change determination unit 34a determines whether or not the time to change the shift position has come, based on the vehicle speed and the amount of accelerator turn. That is, the auto shift change determination unit 34a determines whether or not the current driving point of the vehicle (vehicle speed, amount of accelerator turn) has reached a shift change point. The auto shift change determination unit 34a generates a shift change command when determining that the current driving point has reached the shift change point. The shift change execution unit 34c executes shift change (shift up or shift down) in response to the shift change command. The auto shift change determination unit 34a performs the processing when the auto mode is selected.

The processing by the auto shift change determination unit 34a is executed in the following manner, for example. That is, the storage device 31 has maps stored therein which defines the shift change points (vehicle speed, amount of accelerator turn) at which the shift change is executed (hereinafter, "shift change maps"). The auto shift change determination unit 34a refers to the shift change maps and determines whether or not current driving points detected through the sensors 41, 44 have reached the shift change points, i.e., whether or not the shift change time has come.

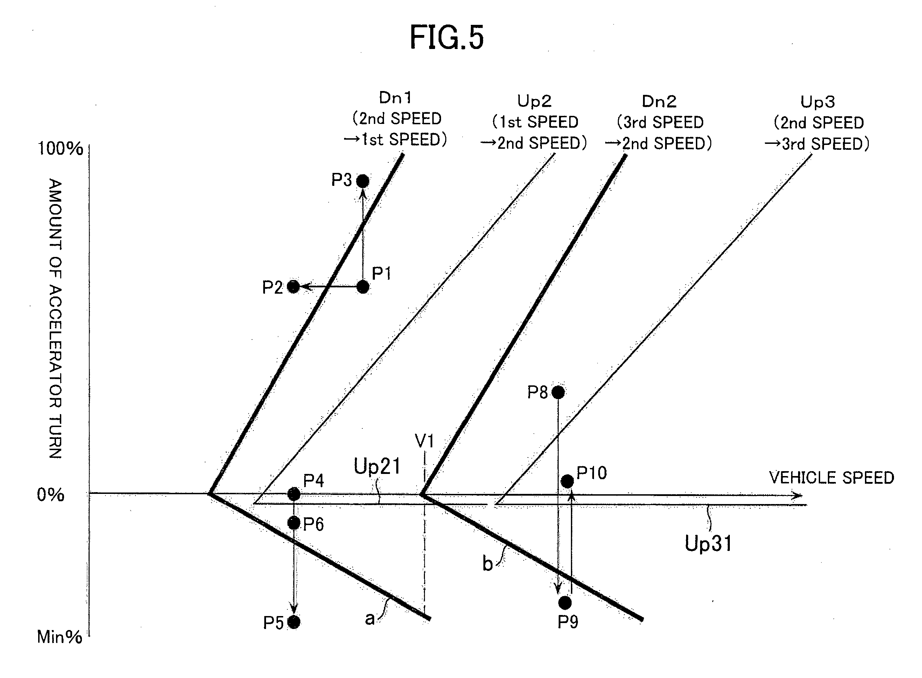

Fig. 5 shows examples of shift change maps. In the same drawing, the horizontal axis indicates the vehicle speed and the vertical axis indicates the amount of accelerator turn. The neutral position of the accelerator grip 24 corresponds to 0% of the amount of accelerator turn. The maximum turn position of the accelerator grip 24 in the positive direction corresponds to 100% of the amount of accelerator turn, and the maximum turn position of the accelerator grip 24 in the negative direction corresponds to Min%.

The storage device 31 has a map for shift down (hereinafter, "shift-down map") and a map for shift up (hereinafter, "shift-up map") as the shift change maps. The shift-down map defines the shift change point at which the shift down is executed and the shift-up map defines the shift change point at which the shift up is executed. In Fig. 5, the two examples of the maps are superimposed. In the following explanation, the vehicle speed at which shift down is executed, the amount of accelerator turn with which shift down is executed, the vehicle speed at which shift up is executed, the amount of accelerator turn with which shift up is executed are referred to as "shift-down vehicle speed", "amount of shift-down turn", "shift-up vehicle speed", "amount of shift-up turn", respectively.

In the shift-down map, lines defining relationships between the shift-down vehicle speed and the amount of shift-down turn (hereinafter, referred to as "shift-down lines") are set. The shift-down lines respectively correspond to the shift positions related to shift down (for example, from 2nd speed to 1st speed, from 3rd speed to 2nd speed, from 4th speed to 3rd speed, etc.). In Fig. 5, as the examples, two shift-down lines Dn1, Dn2 are shown. The shift-down line Dn1 shows the shift change point from 2nd speed to 1st speed, for example, and the shift-down line Dn2 shows the shift change point from 3rd speed to 2nd speed, for example.

The auto shift change determination unit 34a determines that the time for shift down has come when the current driving point crosses over the shift-down line during a situation where the vehicle speed reduces or a situation where the absolute value of the amount of accelerator turn increases. Referring to Fig. 5, for example, the determination that the time for shift down has come is made when the driving point reaches the shift change point specified by the shift-down line Dn1 in a situation in which the driving point changes from P1 to P2 due to reduction of the vehicle speed. Further, the determination that the time for shift down has come is also made when the driving point reaches the shift change point specified by the shift-down line Dn1 in a situation in which the driving point changes from P1 to P3 due to increase of the amount of accelerator turn in the positive direction.

The shift-down map is defined for both the amount of positive accelerator turn and the amount of negative accelerator turn. That is, the shift down lines are defined for both the positive region and the negative region of the amount of accelerator turn. Therefore, for example, the auto shift change determination unit 34a determines that the time for shift down has come when the driving point reaches the shift change point of the shift-down line Dn1 in a situation in which the driving point changes from P4 to P5 due to increase of the amount of accelerator turn in the negative direction (increase of the absolute value). Note that, when the accelerator grip 24 is in the neutral position, i.e., the amount of accelerator turn is 0%, the engine control unit 33 sets the throttle opening to the minimum. As a result, the engine torque is negative and the engine brake acts. When shift down is executed after the amount of accelerator turn further reduces from 0% (increases in the negative direction) and the current driving point reaches the shift-down line, the engine brake increases. As a result, compared to the case where the amount of accelerator turn is 0%, the vehicle is greatly decelerated.

Note that, in the example in Fig. 5, when the driving point only changes from P4 to P6 because the increase of the amount of accelerator turn in the negative direction is small, the driving point does not reach any shift-down line, and thus the determination that the time for shift down has come is not made. That is, even when the amount of accelerator turn increases from 0% in the negative direction, whether or not the current driving point has reached the shift change point is determined based on the amount of increase, and shift down is executed according to the determination result.

As shown in Fig. 5, in the region in which the amount of accelerator turn is positive, the shift-down line is defined so that the shift-down vehicle speed becomes higher as the amount of the shift-down turn increases from 0%. Further, also, in the region in which the amount of accelerator turn is negative, the shift-down line is defined so that the shift-down vehicle speed becomes higher as the amount of the shift-down turn increases in the negative direction. That is, the shift-down line is defined so that the shift-down vehicle speed becomes higher as the absolute value of the amount of shift-down turn increases. In the example in Fig. 5, the shift-down lines Dn1, Dn2 are defined so that the shift-down vehicle speed becomes higher as the amount of shift-down turn increases from 0% in the negative direction. Therefore, the larger the turn of the accelerator grip 24 in the negative direction by the rider, the higher vehicle speed at which shift down is performed. The shift-down lines are not limited to those. For example, the shift-down vehicle speed may be constant in the region in which the amount of accelerator turn is larger than a predetermined negative value (near 0%), for example.

The shift-down line is defined so that at least one shift down is executed when the accelerator grip 24 turns to the lower limit from the neutral position in the negative direction, i.e., the amount of accelerator turn changes from 0% to Min%. Referring the adjacent two shift-down lines Dn1, Dn2 in Fig. 5, the highest shift-down vehicle speed defined by one shift-down line Dn1 (V1 in Fig. 5) is equal to or higher than the lowest shift-down vehicle speed defined by the other shift-down line Dn2. Alternatively, the shift-down line may be defined so that a plurality of shift downs may be executed when the amount of accelerator turn changes from 0% to Min%.

As shown in Fig. 5, in the shift-up map, lines showing relationships between the shift-up vehicle speed and the amount of shift-up turn (hereinafter, referred to as "shift-up lines") are defined. The shift-up lines respectively correspond to the shift positions related to the shift up (for example, from 1st speed to 2nd speed, from 2nd speed to 3rd speed, from 3rd speed to 4th speed, etc.). In Fig. 5, as the examples, two shift-up lines Up2, Up3 are shown. The shift-up line Up2 shows the shift change point from 1st speed to 2nd speed, for example, and the shift-up line Up3 shows the shift change point from 2nd speed to 3rd speed, for example.

The auto shift change determination unit 34a determines that the time for shift up has come when the current driving point crosses over the shift-up line in a situation where the vehicle speed increases or a situation the absolute value of the amount of accelerator turn reduces. Hysteresis is provided between the shift-up line and the shift-down line. That is, referring to the adjacent two of the shift-down line (e.g., Dn1) and the shift-up line (e.g., Up2), the shift-up line is defined toward the higher speed from the shift-down line.

The shift-up map has a shift-up line defined therein for returning the shift position when the amount of accelerator turn returns from the negative value to a predetermined value (e.g., 0%) (hereinafter, referred to as "shift position return line"). Referring to Fig. 5, the shift-up lines Up2, Up3 include shift position return lines Up21, Up31. In the example in Fig. 5, the shift-down lines Dn1, Dn2 have parts a, b in regions in which the amount of accelerator turn is negative. The shift position return lines Up21, Up31 are defined nearer 0% of the amount of accelerator turn than the parts a, b. The shift position return lines Up21, Up31 of the example in Fig. 5 are defined so that the amount of shift-up turn is constant independent of the vehicle speed. The amount of shift-up turn defined by the shift position return line is 0%, for example. Further, the amount of shift-up turn defined by the shift position return line may be a positive value slightly higher than 0% or a value slightly lower than 0%.

By using the shift position return line, the shift position changes as below, for example. When the driving point changes from P8 to P9 to reach the shift change point defined by the shift-down line Dn2 due to increase of the amount of accelerator turn in the negative direction, shift down (3rd speed to 2nd speed) is executed. Then, when the driving point changes from P9 to P10 to reach the shift change point defined by the shift position return line Up31 due to increase of the amount of accelerator turn in the positive direction, the auto shift change determination unit 34a determines that the time for shift up has come. Then, shift up from 2nd speed to 3rd speed is executed.

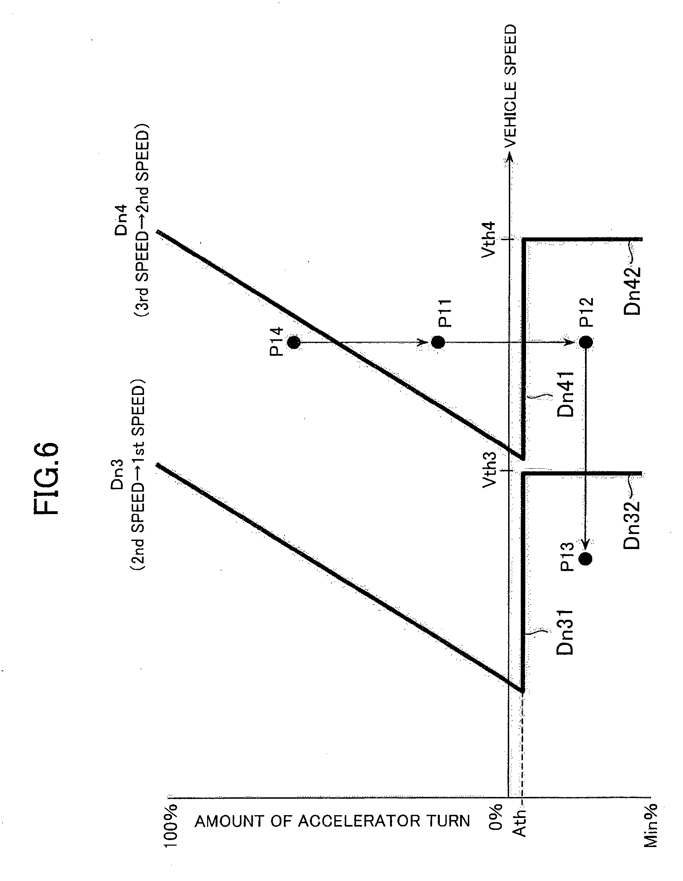

Fig. 6 shows an alternative example of the shift-down map. Also, in the shift-down map of the example in the drawing, shift-down lines showing relationships between the shift-down vehicle speed and the amount of shift-down turn are defined. In Fig. 6, as examples, two shift-down lines Dn3, Dn4 are shown. The shift-down line Dn3 defines the shift change point from 2nd speed to 1st speed, for example, and the shift-down line Dn4 defines the shift change point from 3rd speed to 2nd speed, for example.

The shift-down lines Dn3, Dn4 are defined for both the positive region and the negative region of the amount of accelerator turn. The shift-down line is set so that the shift-down vehicle speed increases as the amount of shift-down turn increases in the positive region of the amount of accelerator turn. On the other hand, the shift-down lines include amount of turn threshold lines (Dn31, Dn41 in Fig. 6) in the negative region of the amount of accelerator turn. The amount of turn threshold line defines a threshold (amount of shift-down turn threshold) Ath with respect to the amount of accelerator turn. That is, when the amount of accelerator turn detected through the sensor 44 exceeds the amount of shift-down turn threshold Ath in the negative direction, shift down is executed. The amount of shift-down turn threshold Ath is a value lower than 0% corresponding to the neutral position of the accelerator grip 24, for example.

Referring to Fig. 6, the shift-down lines Dn3, Dn4 include the amount of turn threshold lines Dn31, Dn41. The amount of turn threshold lines Dn31, Dn41 defines the amount of shift-down turn threshold Ath independent of the vehicle speed. Note that, in Fig. 6, a gap is provided between the amount of turn threshold lines Dn31, Dn41 for clarification of them. These two amount of turn threshold lines Dn31, Dn41 may be connected.

The amount of shift-down turn thresholds Ath defined by the amount of turn threshold lines included in the shift-down lines may be different from each other. For example, the amount of shift-down turn threshold Ath may be set to be smaller as the shift positions related to shift down (shift positions before and after shift down) are lower. That is, the amount of shift-down turn threshold Ath may be set to be larger in the negative direction as the shift positions related to shift down are lower. Referring to Fig. 6, the amount of shift-down turn threshold Ath defined by the amount of turn threshold line Dn31 may be lower than the amount of shift-down turn threshold Ath defined by the amount of turn threshold line Dn41. In this manner, only when the accelerator grip 24 is largely operated in the negative direction, shift down to the low shift position (e.g., 1st speed or 2nd speed) is executed and the greater engine brake is obtained.

Each of the shift-down lines of the example in Fig. 6 includes a vehicle speed threshold line in the region of the amount of negative accelerator turn. The vehicle speed threshold line defines a threshold value Vth with respect to the vehicle speed (shift-down vehicle speed threshold). That is, when the vehicle speed detected through the sensor 41 exceeds the shift-down vehicle speed threshold Vth toward the lower speed, shift down is executed. Referring to Fig. 6, the shift-down lines Dn3, Dn4 include vehicle speed threshold lines Dn32, Dn42. The vehicle speed threshold lines Dn32, Dn42 defines the shift-down vehicle speed threshold Vth3, Vth4 independent of the amount of accelerator turn.

According to the shift-down map shown in Fig. 6, when the amount of accelerator turn becomes larger in the negative direction to reach the amount of shift-down turn threshold Ath, the auto shift change determination unit 34a determines that the time for shift down has come independent of the vehicle speed detected by the sensor 41. For example, when the amount of accelerator turn increases in the negative direction and then the current driving point reaches the shift change point specified by the amount of turn threshold line Dn41 in a situation where the current driving point changes from P11 to P12, shift down from 3rd speed to 2nd speed is executed. When the current driving point reaches the shift change point defined by the vehicle speed threshold line Dn32 in a situation where the driving point changes from P12 to P13 due to the subsequent reduction of the vehicle speed, shift down from 2nd speed to 1st speed is executed. According to the shift-down map in Fig. 6, when the amount of accelerator turn changes from the higher positive value to the negative value due to abrupt reduction of the amount of accelerator turn, shift down is not executed. For example, when the current driving point abruptly changes from P14 to P12, the driving points before and after the change (P14 and P12) are located at the same side with respect to the shift-down line Dn4, and thus, the shift position is maintained at 2nd speed.

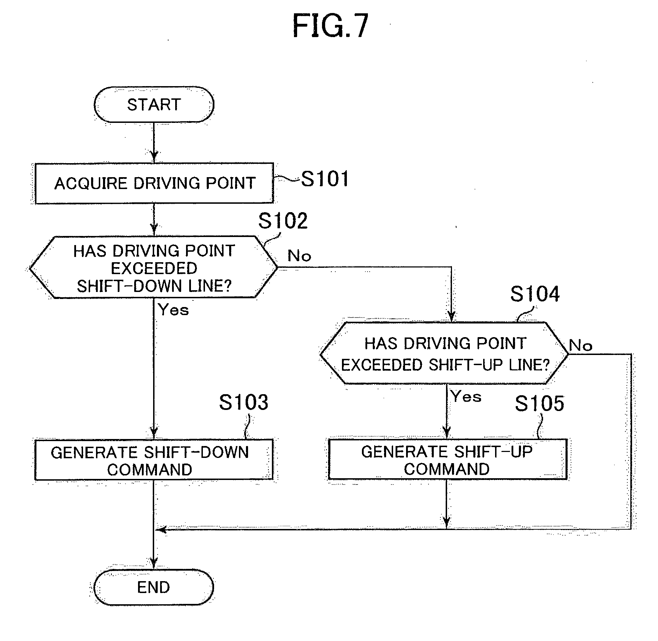

Fig. 7 is a flowchart showing an example of processing executed by the auto shift change determination unit 34a. The series of processing shown in Fig. 7 is repeatedly executed with a predetermined period while the auto mode is selected.

The auto shift change determination unit 34a first acquires the current driving point (S101). Specifically, the auto shift change determination unit 34a respectively acquires the vehicle speed and the amount of accelerator turn based on the output signals of the vehicle speed sensor 41 and the accelerator operation sensor 44. Then, the auto shift change determination unit 34a determines whether or not the acquired driving point has exceeded the shift-down line (S102). For example, the auto shift change determination unit 34a compares the driving point acquired in the previous cycle and the driving point acquired in the present cycle. Then, the auto shift change determination unit 34a determines whether or not the present driving point has exceeded the shift-down line in a situation where the vehicle speed decreases or the absolute value of the amount of accelerator turn increases. If the driving point acquired at the present cycle exceeds the shift-down line, the auto shift change determination unit 34a generates a shift change command (shift-down command) corresponding to the shift-down line (S103).

At S102, if the driving point acquired at the present cycle has not exceeded any one of the shift-down lines, the auto shift change determination unit 34a determines whether or not the driving point acquired at the present cycle has exceeded any one of the shift-up lines (S104). For example, the auto shift change determination unit 34a compares the driving point acquired in the previous cycle and the driving point acquired in the present cycle. Then, the auto shift change determination unit 34a determines whether or not the present driving point has exceeded the shift-up line in a situation where the vehicle speed increases or a situation where the absolute value of the amount of accelerator turn decreases. If the driving point acquired at the present cycle has exceeded the shift-up line, the auto shift change determination unit 34a generates a shift change command (shift-up command) corresponding to the shift-up line (S105). At S104, if the driving point acquired at the present cycle has not exceeded the shift-up line, the auto shift change determination unit 34a ends the present cycle and starts processing from S101 again.

When the shift change command is generated by the auto shift change determination unit 34a or the manual shift change determination unit 34b to be described later, the shift change execution unit 34c activates the clutch actuator 22 and the shift actuator 23 to operate the clutch 12 and the transmission gear of the transmission 13 in a predetermined procedure, and thereby, executes shift change in response to the shift change command. For example, the shift change execution unit 34c first sets the clutch 12 in the non-engagement state. Then, the shift change execution unit 34c changes the current shift position to the next shift position designated by the shift change command through shift of the transmission gears and engagement of the transmission gears. Finally, the shift change execution unit 34c returns the clutch 12 into the engagement state and ends shift change.

The manual shift change determination unit 34b generates a shift change command indicating the next shift position, based on the current shift position and the shift change request received through the shift switch 42. The shift change execution unit 34c executes shift change in response to the generated shift change command through the above described processing. The manual shift change determination unit 34b may determine whether or not the shift change request received through the shift switch 42 is appropriate, based on the present driving state, and generate a shift change command for the shift change execution unit 34c if the shift change request is appropriate. For example, an upper limit and a lower limit are defined for the vehicle speed that allows shift up and an upper limit and a lower limit are defined for the vehicle speed that allows shift down. Further, the manual shift change determination unit 34b may generate a shift-up command or shift-down command under the condition that the present driving state of the vehicle is within the upper limit and the lower limit.

The mode selection unit 34d executes processing of switching the control mode executed by the transmission control unit 34 between the auto mode and the manual mode when the mode selection switch 43 is operated. For example, a flag showing the current control mode is stored in the storage device 31. The mode selection unit 34d changes the flag when the mode selection switch 43 is operated. For example, when the mode selection switch 43 is operated during the auto mode, the mode selection unit 34d changes the flag to one indicating the manual mode. When the flag indicates the auto mode, the processing of the auto shift change determination unit 34a is executed. When the flag indicates the manual mode, the processing of the manual shift change determination unit 34b is executed.

As described above, during the auto mode of controlling the transmission 13 so that the transmission ratio (shift position) of the transmission 13 coincides with the transmission ratio (shift position) obtained based on the amount of accelerator turn, the controller 30 changes the transmission ratio of the transmission 13 toward the low-speed, i.e., executes shift down due to the turn of the accelerator grip 24 from the neutral position in the negative direction. Thereby, i) speed reduction by braking operation, ii) speed reduction using the engine brake by setting the amount of turn of the accelerator grip to zero, i.e., placing the accelerator grip in the neutral position, and iii) speed reduction using the engine brake while changing the transmission ratio toward the low-speed can be selected during the auto mode. That is, the options of the speed reduction method may be increased. As a result, the operability of the vehicle may be improved. Further, the speed reduction of iii) is realized by turning the accelerator grip in the negative direction, and thus, the speed reduction by changing the transmission ratio toward the low-speed can be realized by a simple operation.

The invention is not limited to the motorcycle 1 that has been explained as above, various changes may be made thereto.

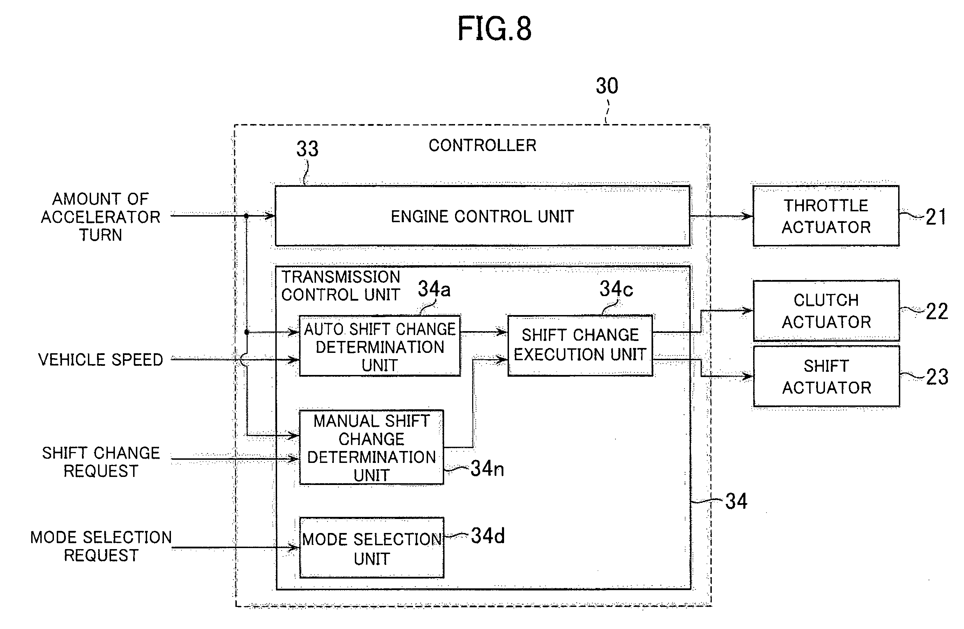

For example, the amount of turn of the accelerator grip 24 in the negative direction may be also used in the manual mode. Fig. 8 is a block diagram showing functions of the controller 30 according to the embodiment. In the drawing, the same parts as those that have been explained have the same signs. The controller 30 of the example includes a manual shift change determination unit 34n.

The manual shift change determination unit 34n generates a shift change command according to the shift change request received through the shift switch 42 like the above described manual shift change determination unit 34b. In addition, the manual shift change determination unit 34n receives, as a shift-down request, the turn operation of the accelerator grip 24 from the neutral position in the negative direction, and generates a shift change command according to the shift-down request. That is, the manual shift change determination unit 34n generates a shift-down command according to the amount of negative accelerator turn. For example, when the amount of accelerator turn detected by the sensor exceeds the negative threshold value preset with respect to the amount of accelerator turn (e.g., the above described amount of shift-down turn threshold Ath) in the negative direction, i.e., is lower than the negative threshold value, the manual shift change determination unit 34n determines that a shift-down request has been made. Then, the manual shift change determination unit 34n generates a shift-down command for the shift change execution unit 34c according to the shift-down request.

In the above explanation, the transmission 13 has been the multi-level variable transmission having transmission gears. However, the transmission 13 may be a continuously variable transmission (hereinafter, referred to as "CVT"). The CVT has two pulleys with a belt around, and each pulley includes two sheaves that sandwich the belt. In this case, the shift actuator 23 controls the transmission ratio by adjusting the distance between the two sheaves forming one pulley.

In the embodiment in which the transmission 13 is the CVT, the transmission control unit 34 calculates a target with respect to the transmission ratio (hereinafter, referred to as "target transmission ratio"), based on the vehicle speed and the amount of accelerator turn detected by the sensors 41, 44. Then, the transmission 13 is controlled through the actuator 23 so that the actual transmission ratio coincides with the target transmission ratio. Particularly, the transmission control unit 34 of the embodiment changes the transmission ratio toward the low-speed due to turn of the accelerator grip 24 in the negative direction. That is, when the accelerator grip 24 turns in the negative direction, the transmission control unit 34 changes the target transmission ratio toward the low-speed.

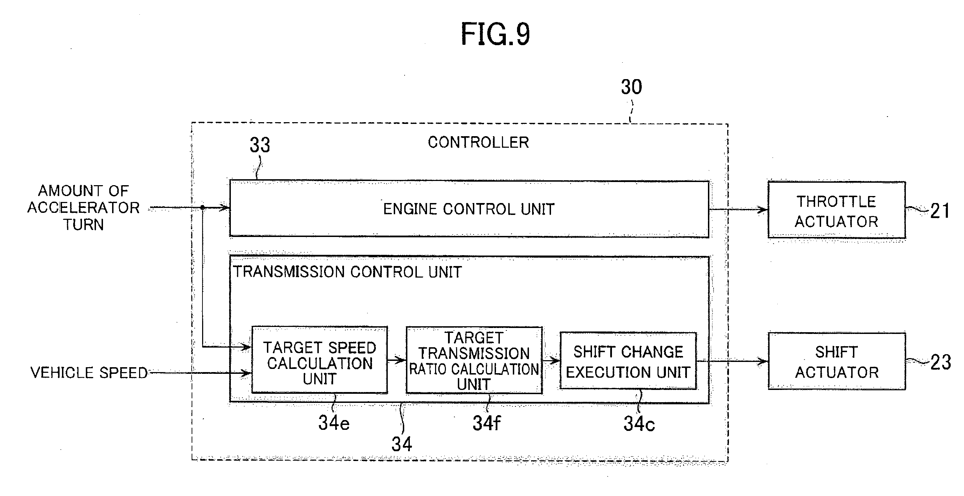

Fig. 9 is a block diagram showing functions of the transmission control unit 34 in the embodiment in which the transmission 13 is the CVT. The transmission control unit 34 shown in Fig. 9 includes a target speed calculation unit 34e and a target transmission ratio calculation unit 34f.

The target speed calculation unit 34e calculates a target with respect to the engine speed (target engine speed), based on the vehicle speed and the amount of accelerator turn detected by the sensors 41, 44. In the storage device 31, a map associating the vehicle speed and the amount of accelerator turn with the target engine speed (engine speed map) is stored. The target speed calculation unit 34e calculates the target engine speed corresponding to the vehicle speed and the amount of accelerator turn detected by the sensors 41, 44 by referring to the engine speed map. The target transmission ratio calculation unit 34f calculates the target transmission ratio according to the calculated target engine speed and the current vehicle speed. For example, the target transmission ratio calculation unit 34f divides the target engine speed by the vehicle speed and calculates the target transmission ratio according to the obtained value. The shift change execution unit 34c uses the shift actuator 23 to move the sheaves of the pulleys of the transmission 13 so that the actual transmission ratio coincides with the target transmission ratio.

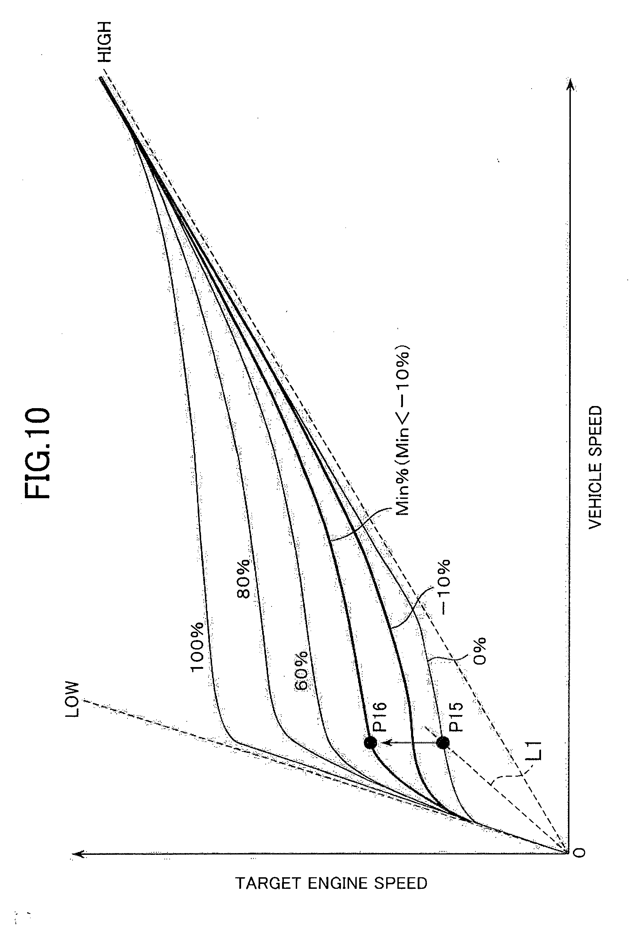

Fig. 10 shows an example of the engine speed map. In the drawing, the horizontal axis indicates the vehicle speed and the vertical axis indicates the target engine speed. In the engine speed map, relationships between the vehicle speed and the target engine speed with respect to each amount of accelerator turn are defined. In the drawing, as the example, there are lines showing the relationships between the vehicle speed and the target engine speed (target speed lines) with respect to amounts of accelerator turn of 0%, 60%, 80%, 100%. In engine speed map, the target speed lines are continuously defined with respect to the amounts of accelerator turn. The gradient of the line connecting each driving point (vehicle speed, target engine speed) and the origin corresponds to the transmission ratio. Further, line LOW shows the relationship between the vehicle speed and the target engine speed obtained when the transmission ratio is the low-speed. Line HIGH shows the relationship between the vehicle speed and the target engine speed obtained when the transmission ratio is top-speed. The engine speed map is set so that, when the vehicle speed is constant and the amount of accelerator turn takes a positive value, the transmission ratio becomes closer to the low-speed as the amount of accelerator turn increases.

In the embodiment, the engine speed map is also defined with respect to the amount of negative accelerator turn. That is, relationships between the vehicle speed and the target engine speed are also defined with respect to the amount of negative accelerator turn. Fig. 10 shows target speed lines defines the relationships between the vehicle speed and the target engine speed with respect to the amounts of accelerator turn of "-10%" and "Min% (Min is a negative value)".

The engine speed map is set so that, when the vehicle speed is constant and the amount of accelerator turn takes a negative value, the transmission ratio becomes closer to the value of low-speed as the amount of accelerator turn decreases (increases in the negative direction). That is, in the region in which the amount of accelerator turn is negative, the target engine speed becomes higher as the amount of accelerator turn decreases. Accordingly, the gradient of the line (e.g., line L1) connecting the driving point on the target speed line with respect to the amount of negative accelerator turn and the origin becomes larger as the amount of accelerator turn increases in the negative direction. For example, the situation in which the driving point is P15 (vehicle speed: Va, amount of accelerator turn: 0%) is assumed. In the situation, when the driving point P15 changes to P16 (vehicle speed: Va, amount of accelerator turn: Min%) due to turn of the accelerator grip 24 in the negative direction, the gradient of the line connecting each driving point and the origin increases and thus the transmission ratio changes toward the low-speed.

In the above explanation, the accelerator operation sensor 44 outputs a signal in response not only to the amount of turn of the accelerator grip 24 in the positive direction but also to the amount of turn of the accelerator grip 24 in the negative direction. However, the accelerator operation sensor 44 does not necessarily detect the amount of turn with respect to the turn of the accelerator grip 24 in the negative direction. That is, the accelerator operation sensor 44 may be a switch that detects whether or not the amount of accelerator turn has reached the threshold value. In this case, the accelerator operation sensor 44 may include a sensor that outputs a signal in response to the amount of turn of the accelerator grip 24 in the positive direction and a sensor that outputs a signal in response to whether or not the amount of negative accelerator turn has reached the negative threshold value. When the auto shift change determination unit 34a detects that the turn of the accelerator grip 24 in the negative direction has reached the threshold value through the accelerator operation sensor 44, the auto shift change determination unit 34a changes the transmission ratio toward the low-speed. That is, when the transmission is the multi-level variable transmission, the auto shift change determination unit 34a generates a shift-down command based on whether or not there is turn in the negative direction. Furthermore, when the turn of the accelerator grip 24 in the negative direction is no longer detected, the auto shift change determination unit 34a may generate a shift-up command for returning the shift position.

## Claims

1. A straddle-type vehicle comprising:
an engine (11);
a transmission (13) adapted to transmit power of the engine (11) to a driving wheel (3);
an actuator (23) adapted to operate the transmission (13) to change a transmission ratio;
an accelerator grip (24) adapted to be turnable from a neutral position in a positive direction; and
a controller (30) adapted to control the transmission (13) so that the transmission ratio of the transmission (13) coincides with a transmission ratio obtained according to an amount of turn of the accelerator grip (24),
**characterized in that**
the accelerator grip (24) is urged toward the neutral position and is adapted to be turnable from the neutral position in a negative direction, and
the controller (30) adapted to change the transmission ratio of the transmission (13) toward a low-speed due to the turn of the accelerator grip (24) from the neutral position in the negative direction so as to provide a speed reduction using the engine brake.

2. The straddle-type vehicle according to claim 1, further comprising a sensor (44) adapted to detect the amount of turn of the accelerator grip (24) in the negative direction,
wherein the controller (30) is adapted to control the transmission ratio according to the detected amount of turn.

3. The straddle-type vehicle according to claim 2, wherein the controller (30) includes a storage device (31) adapted to store a map defining a relationship between a vehicle speed at which the transmission ratio is changed toward the low-speed and the amount of turn of the accelerator grip (24), and
the map is set so that the vehicle speed at which the transmission ratio is changed toward the low-speed becomes higher as the amount of turn of the accelerator grip (24) in the negative direction increases.

4. The straddle-type vehicle according to claim 2, wherein the controller (30) includes a storage device (31) adapted to store a map defining a relationship between a vehicle speed at which the transmission ratio is changed toward the low-speed and the amount of turn of the accelerator grip (24), and
the map is defined so that the transmission ratio is changed toward the low-speed when the amount of turn of the accelerator grip (24) in the negative direction exceeds a threshold value.

5. The straddle-type vehicle according to claim 1, further comprising a switch (44) adapted to detect that the amount of turn of the accelerator grip (24) has reached a threshold value,
wherein the controller (30) is adapted to change the transmission ratio toward the low-speed according to an output of the switch (44).

6. The straddle-type vehicle according to claim 1, wherein the controller (30) is adapted to change the transmission ratio of the transmission (13) toward a top-speed due to return of the accelerator grip (24) to the neutral position after the turn in the negative direction.

7. The straddle-type vehicle according to claim 1, wherein the controller (30) includes a storage device (31) adapted to store a map defining a relationship between a vehicle speed at which the transmission ratio is changed toward the low-speed and the amount of turn of the accelerator grip (24), and
the map is defined with respect to both the amount of turn of the accelerator grip (24) in the positive direction and the amount of turn in the negative direction.

## Patentansprüche

1. Ein Grätsch-Typ-Fahrzeug, das folgende Merkmale aufweist:
einen Motor (11);
ein Getriebe (13), das angepasst ist, um Leistung des Motors (11) zu einem Antriebsrad (3) zu übertragen;
ein Betätigungsglied (23), das angepasst ist, um das Getriebe (13) zu betreiben, um ein Übersetzungsverhältnis zu ändern;
ein Beschleunigergriff (24), der angepasst ist, um von einer neutralen Position in eine positive Richtung drehbar zu sein; und
eine Steuerung (30), die angepasst ist, um das Getriebe (13) zu steuern, so dass das Übersetzungsverhältnis des Getriebes (13) mit einem Übersetzungsverhältnis übereinstimmt, das gemäß einem Drehbetrag des Beschleunigergriffs (24) erhalten wird,
**dadurch gekennzeichnet, dass**
der Beschleunigergriff (24) zu der neutralen Position gedrückt ist und angepasst ist, um von der neutralen Position in eine negative Richtung drehbar zu sein, und
die Steuerung (30) angepasst ist, um das Übersetzungsverhältnis des Getriebes (13) zu einer niedrigen Geschwindigkeit zu ändern aufgrund der Drehung des Beschleunigergriffs (24) von der neutralen Position in die negative Richtung, um unter Verwendung der Motorbremse eine Geschwindigkeitsverringerung bereitzustellen.

2. Das Grätsch-Typ-Fahrzeug gemäß Anspruch 1, das ferner einen Sensor (44) aufweist, der angepasst ist, um den Drehbetrag des Beschleunigergriffs (24) in die negative Richtung zu erfassen,
wobei die Steuerung (30) angepasst ist, um das Übersetzungsverhältnis gemäß dem erfassten Drehbetrag zu steuern.

3. Das Grätsch-Typ-Fahrzeug gemäß Anspruch 2, bei dem die Steuerung (30) eine Speichervorrichtung (31) umfasst, die angepasst ist, um eine Tabelle zu speichern, die eine Beziehung zwischen einer Fahrzeuggeschwindigkeit, bei der das Übersetzungsverhältnis zu der niedrigen Geschwindigkeit geändert wird, und dem Drehbetrag des Beschleunigergriffs (24) definiert, und
die Tabelle eingestellt ist, so dass die Fahrzeuggeschwindigkeit, bei der das Übersetzungsverhältnis zu der niedrigen Geschwindigkeit geändert wird, höher wird, wenn sich der Drehbetrag des Beschleunigergriffs (24) in die negative Richtung erhöht.

4. Das Grätsch-Typ-Fahrzeug gemäß Anspruch 2, bei dem die Steuerung (30) eine Speichervorrichtung (31) umfasst, die angepasst ist, um eine Tabelle zu speichern, die eine Beziehung zwischen einer Fahrzeuggeschwindigkeit, bei der das Übersetzungsverhältnis zu der niedrigen Geschwindigkeit geändert wird, und dem Drehbetrag des Beschleunigergriffs (24) definiert, und
die Tabelle definiert ist, so dass das Übersetzungsverhältnis zu der niedrigen Geschwindigkeit geändert wird wenn der Drehbetrag des Beschleunigergriffs (24) in die negative Richtung einen Schwellenwert überschreitet.

5. Das Grätsch-Typ-Fahrzeug gemäß Anspruch 1, das ferner einen Schalter (44) aufweist, der angepasst ist, um zu erfassen, dass der Drehbetrag des Beschleunigergriffs (24) einen Schwellenwert erreicht hat,
wobei die Steuerung (30) angepasst ist, um das Übersetzungsverhältnis gemäß einer Ausgabe des Schalters (44) zu der niedrigen Geschwindigkeit zu ändern.

6. Das Grätsch-Typ-Fahrzeug gemäß Anspruch 1, bei dem die Steuerung (30) angepasst ist, um das Übersetzungsverhältnis des Getriebes (13) zu einer Höchstgeschwindigkeit zu ändern aufgrund einer Rückkehr des Beschleunigergriffs (24) zu der neutralen Position nach der Drehung in die negative Richtung.

7. Das Grätsch-Typ-Fahrzeug gemäß Anspruch 1, bei dem die Steuerung (30) eine Speichervorrichtung (31) umfasst, die angepasst ist, um eine Tabelle zu speichern, die eine Beziehung zwischen einer Fahrzeuggeschwindigkeit, bei der das Übersetzungsverhältnis zu der niedrigen Geschwindigkeit geändert wird, und dem Drehbetrag des Beschleunigergriffs (24) definiert, und
die Tabelle sowohl bezüglich des Drehbetrags des Beschleunigergriffs (24) in die positive Richtung als auch des Drehbetrags in die negative Richtung definiert ist.

## Revendications

1. Véhicule de type à enfourcher, comprenant:
un moteur (11);
une transmission (13) adaptée pour transmettre l'énergie du moteur (11) à une roue d'entraînement (3);
un actionneur (23) adapté pour faire fonctionner la transmission (13) pour modifier un rapport de transmission;
une poignée d'accélérateur (24) adaptée pour pouvoir tourner d'une position neutre dans une direction positive; et
une commande (30) adaptée pour commander la transmission (13) de sorte que le rapport de transmission de la transmission (13) coïncide avec un rapport de transmission obtenu selon une quantité de rotation de la poignée d'accélérateur (24),
**caractérisé par le fait que**
la poignée d'accélérateur (24) est poussée vers la position neutre et est adaptée pour pouvoir tourner de la position neutre dans une direction négative, et
la commande (30) est adaptée pour changer le rapport de transmission de la transmission (13) vers une basse vitesse par suite de la rotation de la poignée d'accélérateur (24) de la position neutre dans la direction négative, de manière à provoquer une réduction de vitesse à l'aide du frein de moteur.

2. Véhicule de type à enfourcher selon la revendication 1, comprenant par ailleurs un capteur (44) adapté pour détecter la quantité de rotation de la poignée d'accélérateur (24) dans la direction négative,
dans lequel la commande (30) est adaptée pour commander le rapport de transmission en fonction de la quantité de rotation détectée.

3. Véhicule du type à enfourcher selon la revendication 2, dans lequel la commande (30) comporte un dispositif de mémoire (31) adapté pour mémoriser une carte définissant un rapport entre une vitesse de véhicule à laquelle le rapport de transmission est modifié vers la basse vitesse et la quantité de rotation de la poignée d'accélérateur (24), et
la carte est réglée de sorte que la vitesse de véhicule à laquelle le rapport de transmission est modifié vers la basse vitesse devient supérieure au fur et à mesure que la quantité de rotation de la poignée d'accélérateur (24) dans la direction négative augmente.

4. Véhicule de type à enfourcher selon la revendication 2, dans lequel la commande (30) comporte un dispositif de mémoire (31) adapté pour mémoriser une carte définissant un rapport entre une vitesse de véhicule à laquelle le rapport de transmission est modifié vers la basse vitesse et la quantité de rotation de la poignée d'accélérateur (24), et
la carte est définie de sorte que le rapport de transmission soit modifié vers la basse vitesse lorsque la quantité de rotation de la poignée d'accélérateur (24) dans la direction négative excède une valeur de seuil.

5. Véhicule de type à enfourcher selon la revendication 1, comprenant par ailleurs un commutateur (44) adapté pour détecter que la quantité de rotation de la poignée d'accélérateur (24) a atteint une valeur de seuil,
dans lequel la commande (30) est adaptée pour changer le rapport de transmission vers la basse vitesse selon une sortie du commutateur (44).

6. Véhicule du type à enfourcher selon la revendication 1, dans lequel la commande (30) est adaptée pour changer le rapport de transmission de la transmission (13) vers une vitesse supérieure par suite de la rotation de la poignée d'accélérateur (24) vers la position neutre après la rotation dans la direction négative.

7. Véhicule de type à enfourcher selon la revendication 1, dans lequel la commande (30) comprend un dispositif de mémoire (31) adapté pour mémoriser une carte définissant un rapport entre une vitesse de véhicule à laquelle le rapport de transmission est modifié vers la basse vitesse et la quantité de rotation de la poignée d'accélérateur (24), et
la carte est définie par rapport tant à la quantité de rotation de la poignée d'accélérateur (24) dans la direction positive qu'à la quantité de rotation dans la direction négative.
